# EUROPEAN PATENT APPLICATION

(11) **EP 4 234 414 A1**
(43) Date of publication of application: **30.08.2023**
(21) Application number: 22158946.8
(22) Date of filing: 25.02.2022
(51) Int. Cl.: B64D 47/08, B64D 45/00

(54) **METHOD AND SYSTEM FOR MONITORING A LAMINAR FLOW ON A SURFACE OF AN AIRCRAFT**

(71) Applicant: Airbus Operations GmbH, 21129 Hamburg (DE)
(72) Inventor: Schlipf, Bernhard, 21129 Hamburg (DE); Daandels, Dort, 21129 Hamburg (DE)

(57) **Abstract**

In a method and a system for monitoring a laminar flow on a surface (11) of an aircraft (10), a surface (11) of an aircraft (10) is observed by on optical sensor (21), and image data of that surface (11) is processed by an image processing system (22) in order to determine an actual extend of a laminar flow on the surface (11). The actual extend of the laminar flow on the surface (11) is compared with a previous extend of the laminar flow on the surface (11), and/or with a potential maximum extend of laminar flow on the surface (11) determined from flight parameters (25) of the aircraft (10). A reduction or a possible optimization of the laminar flow is detected and further processed to improve the laminar flow.

## Description

The invention relates to a method for monitoring a laminar flow on a surface of an aircraft. Further, the invention relates to a system for monitoring a laminar flow on a surface of an aircraft.

The invention is in particular applicable for wings of an aircraft providing a laminar flow during flight, as well as to laminar flow empennages and nacelles. In particular, the invention can be applied for slats or other elements provided at the leading edge of a wing.

Aircrafts comprise surfaces which are typically designed for providing a laminarity. The laminarity depends on the form and the nature of the surface, like e.g. the roughness, the existence of damages like e.g. scratches and dents. At certain positions of the surface, which depends on its form and the nature, a laminar flow may change into a turbulent flow. In particular slats have a laminar boundary layer.

An extended laminar flow on the surfaces of an aircraft helps to reduce the fuel consumption. The extend of laminar flow depends for example on operational parameters like e.g. flight parameters, the weather conditions, surface contamination and degrading conditions of the aircraft. Flight parameters comprise e. g. the altitude and the mass of the aircraft, the Mach number and the center of gravity. Weather conditions comprise e. g. clouds of ice crystals which might reduce the laminar flow during flight. A surface contamination may result from insects, and degrading conditions of the aircraft may comprise e. g. roughness, paint-step erosion and dents.

It is difficult to estimate how much and how often such factors reduce the laminar flow. For example, the insect contamination can vary a lot depending on area and season.

Quite often the benefits of laminar flow are reduced because of the factors mentioned above. In order to maintain the laminar flow and its benefits, e. g. cleaning, repainting and cosmetic or structurally cosmetic repair is necessary.

Further, a loss of laminarity may happen during flight. Therefore, additional fuel must be carried to recover a potential loss of laminarity which may occur. The weight of the additional fuel consumes a significant portion of the benefit of the laminarity.

It is the objective of the invention to maintain and optimize the laminar flow on aircraft surfaces. In particular, the fuel consumption shall be reduced.

The object is achieved by the method according to claim 1 and by the system according to claim 10. Advantageous features are subject matter of the dependent claims.

According to a first aspect, the invention provides a method for monitoring a laminar flow on a surface of an aircraft, comprising the steps: observing a surface of an aircraft and generating image data of that surface; processing the image data in order to determine an actual extend of a laminar flow on the surface, comparing the actual extend of the laminar flow on the surface with a previous extend of the laminar flow on the surface and/or with a potential maximum extend of laminar flow on the surface determined from flight parameters of the aircraft, for detecting a reduction and/or a possible optimization of the laminar flow.

Preferably, a service recommendation for the aircraft and/or an instantaneous recommendation to the flight crew for adapting the flight parameters is provided.

Preferably, historic data of previous flights are used for providing the previous extend of the laminar flow.

Preferably, a damage of the surface is determined from a sudden local reduction of the laminar flow appearing between two flights.

Preferably, a contamination of the surface is detected from a gradual reduction of the laminar flow appearing between one or more landing and take-off cycles.

Preferably, a degradation of the surface is detected from a continuous loss of the average laminar flow during at least 50 or 100 flights or more.

Preferably, the estimated potential maximum extend of laminar flow is calculated based on one or more of the following flight parameters:
(a) center of gravity of the aircraft,
(b) weight of the aircraft,
(c) altitude
(d) airspeed.

Preferably, a repair, clean and/or refurbishment action is recommended based on the detected laminar flow reduction.

Preferably, the recommended action is also based on cost data related to the recommended action.

Preferably, the method comprises evaluating the effect of one or more recovery actions performed according to the automated recommendations.

Preferably, the result of the evaluation is used for providing a future automated recommendation based on future image data representing the extend of the laminar flow on the surface.

Preferably, the optical sensor is configured as an infrared camera.

Preferably, the method comprising the steps: observing a surface of an aircraft by an optical sensor and generating image data of that surface; and processing the image data in order to detect a failure of the surface of the aircraft or a system failure of the aircraft.

According to a second aspect, the invention provides a system for monitoring a laminar flow on a surface of an aircraft, comprising: an optical sensor for observing a surface of an aircraft and generating image data of that surface; an image processing system coupled to the optical sensor, for processing the image data in order to determine an actual extend of a laminar flow on the surface; and a processing unit configured for comparing the actual extend of the laminar flow on the surface with a previous extend of the laminar flow on the surface, and/or with a potential maximum extend of laminar flow on the surface determined from flight parameters of the aircraft, for detecting a reduction and/or a possible optimization of the laminar flow.

Preferably, the system comprises a recommendation unit configured for providing a repair, clean and/or refurbishment action based on the detected laminar flow reduction.

Preferably, the recommended refurbishment action is additionally based on cost data related to the recommended action.

Preferably, an instantaneous recommendation is provided to the flight crew for adapting the flight parameters.

Preferably, the system comprises a detection logic configured for
a) detecting a damage of the surface from a sudden local reduction of the laminar flow appearing between two flights; and/or
b) detecting a contamination of the surface from a gradual reduction of the laminar flow appearing between one or more landing and take-off cycles.
c) detecting a degradation of the surface from a continuous loss of the average laminar flow during at least 50 or 100 flights or more.

Preferably, the system comprises a calculation unit configured for calculating the estimated potential maximum extend of laminar flow based on one or more of the following flight parameters:
(a) center of gravity of the aircraft,
(b) weight of the aircraft,
(c) altitude,
(d) airspeed.

Preferably, the system comprises an evaluation unit coupled to the image processing system and a feedback loop.

Preferably the system has a self-learning capability

Preferably, the evaluation unit is configured to evaluate the effect of one or more recovery actions performed according to the automated recommendations depending on the extend of the laminar flow determined by the image processing system.

Preferably, the feedback loop is configured to provide the effect for future automated recommendations based on the determined extend of the laminar flow.

Preferably, the system is configured for being used in the method according to the invention.

Characteristics and advantages described in relation to the method for monitoring a laminar flow on a surface of an aircraft are also related to the system for monitoring a laminar flow on a surface of an aircraft, and vice versa.

In the following, exemplary embodiments of the invention showing further advantages and characteristics are described in detail with reference to the figures, in which:
- **Fig. 1**: shows a schematic top view of an aircraft equipped with a system for monitoring a laminar flow according to a preferred embodiment of the invention; and
- **Fig. 2**: shows a flow chart of the method according to a preferred example of the invention, wherein the elements and components of the system within an aircraft according to a preferred embodiment of the invention are shown as well.

In the figures, similar or identical elements and features are designated by the same reference numbers. The features, functions and advantages discussed herein and shown in the embodiments can be achieved independently and combined in other embodiments.

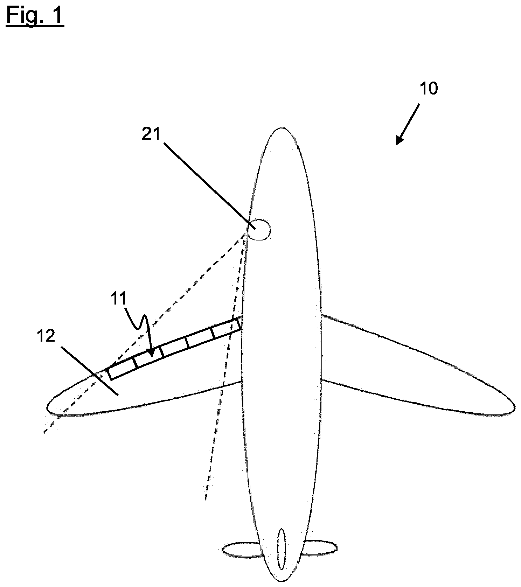

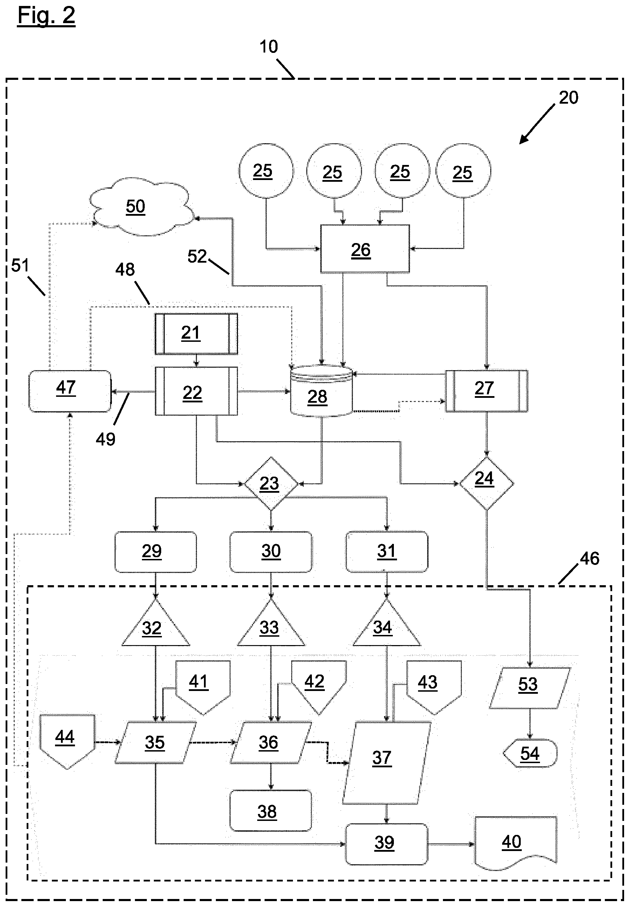

**Fig. 1** shows an aircraft 10 which comprises a system 20 as depicted in Fig. 2 for monitoring a laminar flow on a surface 11 of the aircraft 10. In this preferred embodiment of the invention, the surface 11 is a portion of wing 12 of the aircraft 10, in particular a partial area of a leading edge device providing one or more control surfaces, like e. g. a slat device. The monitoring system 20 comprises an optical sensor 21 configured as an infrared camera for observing the surface 11 of aircraft 10, as indicated by the dotted lines in the figure.

Referring to **Fig. 2** now, further details of the system 20 are discussed, together with steps of the example method associated thereto. The system 20 is part of aircraft 10 as schematically shown in the figure. The system 20 comprises an image processing system 22 which is coupled to the optical sensor or camera 21. The processing system 22 processes image data generated by infrared camera 21 and determines an actual extend of a laminar flow on the surface 11 of aircraft 10. Further, the monitoring system 20 comprises a processing unit 23, 24 which compares the actual extend of the laminar flow on surface 11 with a previous extend of the laminar flow on that surface, and/or with a potential maximum extend of the laminar flow on the surface 11 determined from flight parameters 25 of the aircraft 10. Processing unit 23, 24 is designed for detecting a reduction and/or a possible optimization of the laminar flow on surface 11.

The flight parameters 25 comprise e. g. the center of gravity of the aircraft, the weight of the aircraft, the cruise altitude and/or the air speed. The flight parameters 25 are provided in a flight parameter unit 26 which is coupled to a calculation unit 27 which computes from the flight parameters 25 a potential maximum extend of the laminar flow.

A database unit 28 provided in aircraft 10 is coupled to flight parameter unit 26, to image processing system 22 and to calculation unit 27 and stores the flight parameters 25 provided by flight parameter unit 26, the actual extend of the laminar flow provided by image processing system 22, and the maximum extend of the laminar flow which is calculated or estimated by calculation unit 27.

A first comparison element 23, which is part of comparison unit 23, 24, is coupled to the image processing system 22, from where it receives the actual extend of the laminar flow on the surface 11, and it is further coupled to database unit 28 from where it receives the previous extend of the laminar flow on surface 11, or a plurality of such previous extends.

A detection logic 29, 30, 31 is coupled to the first comparison element 23 and is designed for detecting a damage 32 of the surface 11, and/or detecting a contamination 33 of the surface 11, and/or detecting a degradation 34 of the surface 11. The damage 32 is detected by a first detection element 29 of the detection logic, which detects a local loss of laminarity which appears suddenly between two flights.

The contamination 33 is detected by second detection element 30 of the detection logic, which detects a gradual reduction of the laminar flow causing a step wise reduction of the laminar flow after each landing and takeoff cycle.

Degradation 34 of surface 11 is detected by third detection element 31 of the detection logic, which detects a continuous loss on the average laminar flow over a large number of flights, like e. g. over 50 to 100 or several hundreds of flights.

The damage or damages 32 might e. g. be caused by objects which collided with the surface of interest 11. The contamination 33 is e. g. caused by insects which adhere to the surface 11. Degradation 34 might e. g. relate to the paint line on the surface of interest 11.

A recommendation unit 35, 36, 37 comprising a recommendation element 35, a second recommendation element 36 and a third recommendation element 37, and is coupled to the detection logic 29, 30, 31. The recommendation unit 35, 36, 37 provides a service recommendation for the aircraft 10 depending on the output of the detection logic 29, 30, 31. In case of a damage 32 detection, a recommendation to repair the aircraft is generated electronically. In case of a detected contamination 33, a recommendation to clean the aircraft is electronically generated. In case of a degradation 34, a recommendation is electronically generated to add repaint, exchange or repair tasks in the next scheduled maintenance.

The recommendation to clean the aircraft triggers an automated cleaning service request generated by a cleaning request unit 38. The recommendation to repair the aircraft and the recommendation to add repaint, exchange or repair tasks in the next scheduled maintenance both trigger an automated maintenance/repair planning which is electronically generated by planning element 39.

The automated maintenance/repair planning triggers an automated material order generated by order unit 40 to receive the necessary materials.

Further inputs to the recommendation unit or elements 35, 36, 37 are provided by a cost database comprising costs of repair 41 in case of a detected damage 32, costs of cleaning service 42 in case of a detected contamination 33, and costs of refurbishment 43 in case of a detected degradation 34. Further, the cost database may comprise the price 44 of fuel and CO2 as an input to the recommendation unit 35, 36, 37 in order to optimize the recommendation by considering all relevant parameters. The recommendations 35, 36, 37 can be provided independently from each other or combined with each other, depending on the output or result of the detection logic 29, 30, 31.

The recommendation unit 35, 36, 37 and the cost database comprising costs of repair 41, costs of cleaning service 42, costs of refurbishment 43, and price of fuel and/or CO2 44 are parts of or belong to a recovery action unit 46 generating a recovery action to improve the laminar flow on the surface of interest 11. The recovery action unit 46 is electronically coupled to an evaluation unit 47 which evaluates the effect of a recovery action provided by recovery action unit 46.

A feedback loop 48 connects evaluation unit 47 to aircraft's database 28 for feeding the database with effects of recovery actions performed as a result of the comparison of the actual extend of the laminar flow on the surface 11 with a previous extend of the laminar flow on that surface, which is performed by comparison element 23.

The evaluation unit 47 is further connected to image processing unit 22 by a data connection 49 to include the determined actual extend of laminar flow into feedback loop 48.

Further, a fleet database 50 provided in a cloud is a further part of the monitoring system 20. The fleet database 50 is connected by data connections 51, 52 to evaluation unit 47 and database 28, respectively. Thus, fleet database 50 is fed by evaluation data received form evaluation unit 47 and may exchange the content of fleet database 50 with the content of database 28.

In addition to or alternatively to the service recommendation provided by one or more of recommendation elements 35, 36, 37, a recommendation to adapt one or more of flight parameters 25 can be instantaneously generated by a flight parameter recommendation unit 53 to the flight crew via a cockpit display 54 electronically connected to flight parameter recommendation unit 53. This recommendation results from comparing the actual extend of the laminar flow on the surface 11 with the potential maximum extend of the laminar flow on that surface determined from the flight parameters 25 of the aircraft 10, which are provided by comparison element 24.

The preferred example of the method for monitoring a laminar flow on a surface of an aircraft is shortly summarized in the following:
Surface 11 of aircraft 10 is observed by the optical sensor 21, and image data of that surface are generated. The image data is processed by image processing system 22, wherein an actual extend of a laminar flow on surface 11 is determined. The actual extend of the laminar flow on surface 11 is compared by comparison unit 23, 24 with a previous extend of the laminar flow on that surface 11, and/or with a potential maximum extend of the laminar flow on surface 11 determined from flight parameters 25 of the aircraft 10. Based on this, a reduction and/or a possible optimization of the laminar flow is detected.

For further details of the method, reference is made to the above description of system 20 in which the functions of the various parts and elements of system 20 are explained in detail, wherein the functions and configurations of the various parts and elements are used in the method.

In the method, a permanent laminar flow monitoring is done by using the infrared camera 21 installed in the aircraft 10 to observe the surface of interest 11, like e. g. slats or the wing upper side and others, and a subsequent picture processing is performed to evaluate the actual extend of the laminar flow. A comparison with a potential extend of the laminar flow, which might e. g. be computed from the flight parameters 25, is subsequently processed into an instant recommendation to the flight crew to optimize altitude and speed. It also can adapt the fuel planning based on the measured laminar flow extend.

The data is stored in aircraft database 28, 50 which can be on board and/or ground based. From the data, comparisons of actual and historic data can be used to detect a loss or reduction of laminar flow versus one or more previous flights.

With the processing as described above, the right measures for improvement can be concluded, in particular for damages, contaminations and/or degradations of the surface detected as a result from the comparisons.

For the automated recommendation of recovery actions, the estimated price is compared with the estimated price of the fuel and CO2 that can be saved by it. Feedback loop 48 and big data collection in database 50 might be used to improve the estimation of repair effectiveness and the accuracy of prediction of laminar flow extend.

As an option, one or more cameras in the visible light regime can be used in addition to the one or more infrared cameras, or as an alternative thereto. Such cameras are able to detect insect contamination and to provide recommendations for cleaning operations.

As a particular opportunity, such camera or cameras are used to detect structural failures, for example of slat tracks or their drive systems, by detecting a change in the geometric position of the devices.

As a further opportunity, such cameras are used to detect any type of failures of the ice protection system of the aircraft, and might also be used for detecting piccolo tube ruptures and/or valve failures. They can e. g. be detected by a change in the thermal heat map for an activated ice protection. In this way, the safety of the aircraft is still further increased.

### List of reference numbers:

- 10: aircraft
- 20: system
- 11: surface
- 12: wing 12
- 21: optical sensor 21
- 22: image processing system
- 23, 24: processing unit / comparison unit / comparison elements
- 25: flight parameters
- 26: flight parameter unit
- 27: calculation unit
- 28: database unit
- 29, 30, 31: detection logic / detection elements
- 32: damage
- 33: contamination
- 34: degradation
- 35, 36, 37: recommendation unit 35, 36, 37 / recommendation elements
- 38: cleaning request unit
- 39: planning element
- 40: order unit
- 41, 42, 43: cost database
- 44: price of fuel / CO2
- 46: recovery action unit
- 47: evaluation unit
- 48: feedback loop
- 50: fleet database
- 51, 52: data connections
- 53: flight parameter recommendation unit
- 54: cockpit display

## Claims

1. Method for monitoring a laminar flow on a surface (11) of an aircraft (10), comprising the steps:
observing a surface (11) of an aircraft (10) and generating image data of that surface (11);
processing the image data in order to determine an actual extend of a laminar flow on the surface (11),
comparing the actual extend of the laminar flow on the surface (11)
a) with a previous extend of the laminar flow on the surface (11), and/or
b) with a potential maximum extend of laminar flow on the surface (11) determined from flight parameters (25) of the aircraft (10),
for detecting a reduction and/or a possible optimization of the laminar flow.

2. Method according to claim 1, **characterized by** providing a service recommendation for the aircraft (10) and/or an instantaneous recommendation to the flight crew for adapting the flight parameters (25).

3. Method according to claim 1 or 2, **characterized by** using historic data of previous flights for providing the previous extend of the laminar flow.

4. Method according to one of the preceding claims, wherein
a) a damage of the surface (11) is determined from a sudden local reduction of the laminar flow appearing between two flights; and/or
b) a contamination of the surface (11) is detected from a gradual reduction of the laminar flow appearing between one or more landing and take-off cycles; and/or
c) a degradation of the surface (11) is detected from a continuous loss of the average laminar flow during at least 50 or 100 flights or more.

5. Method according to one of the preceding claims, **characterized in that** the estimated potential maximum extend of laminar flow is calculated based on one or more of the following flight parameters (25):
(a) center of gravity of the aircraft (10),
(b) weight of the aircraft (10),
(c) altitude
(d) airspeed.

6. Method according to one of the preceding claims, **characterized in that** a repair, clean and/or refurbishment action is recommended based on the detected laminar flow reduction and on cost data related to the recommended action.

7. Method according to one of claims 2 to 6, **characterized by** evaluating the effect of one or more recovery actions performed according to the automated recommendations, and
using the result of the evaluation for providing a future automated recommendation based on future image data representing the extend of the laminar flow on the surface (11).

8. Method according to one of the preceding claims, **characterized in that** the optical sensor (21) is an infrared camera.

9. Method for monitoring a laminar flow on a surface (11) of an aircraft (10), in particular according to one of the preceding claims, comprising the steps:
observing a surface (11) of an aircraft (10) by an optical sensor (21) and generating image data of that surface (11);
processing the image data in order to detect a failure of the surface (11) of the aircraft (10) or a system failure of the aircraft (10).

10. System for monitoring a laminar flow on a surface (11) of an aircraft (10), comprising:
an optical sensor (21) for observing a surface (11) of an aircraft (10) and generating image data of that surface (11);
an image processing system (22) coupled to the optical sensor (21), for processing the image data in order to determine an actual extend of a laminar flow on the surface (11); and
a processing unit (23, 24) configured for comparing the actual extend of the laminar flow on the surface (11)
(A) with a previous extend of the laminar flow on the surface (11), and/or
(B) with a potential maximum extend of laminar flow on the surface (11) determined from flight parameters of the aircraft (10),
and for detecting a reduction and/or a possible optimization of the laminar flow.

11. System according to claim 10, **characterized by** a recommendation unit (35, 36, 37) configured for providing
a) a repair, clean and/or refurbishment action based on the detected laminar flow reduction and on cost data related to the recommended action and/or
b) an instantaneous recommendation to the flight crew for adapting the flight parameters.

12. System according to claim 10 or 11, **characterized by** a detection logic (29, 30, 31) configured for
a) detecting a damage of the surface (11) from a sudden local reduction of the laminar flow appearing between two flights, and/or
b) detecting a contamination of the surface (11) from a gradual reduction of the laminar flow appearing between one or more landing and take-off cycles, and/or
d) detecting a degradation of the surface (11) from a continuous loss of the average laminar flow during at least 50 or 100 flights or more.

13. System according to one of claims 10 to 12, **characterized by** a calculation unit (27) configured for calculating the estimated potential maximum extend of laminar flow based on one or more of the following flight parameters:
(a) center of gravity of the aircraft (10),
(b) weight of the aircraft (10),
(c) altitude,
(d) airspeed.

14. System according to one of claims 10 to 13, **characterized by** an evaluation unit (47) coupled to the image processing system (22), and a feedback loop (48), wherein
the evaluation unit (47) is configured to evaluate the effect of one or more recovery actions performed according to the automated recommendations depending on the extend of the laminar flow determined by the image processing system (22), and
the feedback loop (47) is configured to provide the effect for future automated recommendations based on the determined extend of the laminar flow.

15. System according to one of claims 10 to 14, **characterized in that** it is configured for being used in the method according to one of claims 1 to 9.
